**Europäisches Patentamt**

**European Patent Office**

**Office européen des brevets**

(19)

(11) Veröffentlichungsnummer : **0 368 017 B1**

# EUROPÄISCHE PATENTSCHRIFT

(12)

(45) Veröffentlichungstag der Patentschrift :
**12.06.91 Patentblatt 91/24**

(51) Int. Cl.$^5$ : **B60H 1/24**

(21) Anmeldenummer : **89118928.4**

(22) Anmeldetag : **12.10.89**

(54) Luftausströmorgan für den Innenraum von Kraftfahrzeugen.

(30) Priorität : **11.11.88 DE 3838219**

(43) Veröffentlichungstag der Anmeldung :
**16.05.90 Patentblatt 90/20**

(45) Bekanntmachung des Hinweises auf die
Patenterteilung :
**12.06.91 Patentblatt 91/24**

(84) Benannte Vertragsstaaten :
**DE ES FR GB IT SE**

(56) Entgegenhaltungen :
**DE-A- 2 628 663**
**DE-A- 3 510 279**
**DE-B- 1 812 283**
**DE-U- 6 929 387**
**FR-A- 2 029 876**
**US-A- 4 785 596**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Parizek, Vlastislav
Brückelmeierstrasse 1b
W-8000 München 45 (DE)**
Erfinder : **Schramm, Horst
Rathausstrasse 32
W-8047 Karlsfeld (DE)**
Erfinder : **Korcian, Jan, Dr.
Obingerstrasse 3
W-8000 München 82 (DE)**

## Beschreibung

Die Erfindung betrifft ein Luftausströmorgan nach dem Oberbegriff des Anspruchs 1 und geht aus von der gattungsbildenden DE-A-35 10 279.

Neben der üblichen Gestaltung von Kraftfahrzeug-Luftausströmorganen, wie sie beispielsweise in der DE-C-26 28 663 dargestellt sind, wurde aus der zuerst genannten Schrift eine Bauart bekannt, bei welcher mehrere in ihrer Gesamtheit verstellbare Luftleitstege von einem starren Lüftungsgitter verdeckt angeordnet sind. Diese Maßnahme erfüllt u.a. erhöhte Sicherheitsanforderungen, da die Luftleitstege im geschwenkten Zustand nicht aus dem Gehäuse des Luftkanales herausragen.

Von Nachteil ist diese bekannte Anordnung jedoch hinsichtlich des Strömungszustandes des austretenden Luftstromes. Zum einen stellen die relativ breiten Gitterstäbe des Lüftungsgitters dem austretenden Luftstrom einen nicht unerheblichen Widerstand entgegen und verursachen somit extrem starke Verwirbelungen. Zum anderen läßt sich – teilweise auch aufgrund dieser Verwirbelungen – mit einem derartigen bekannten Lüftungsgitter weder ein ausgesprochen direkt wirkender Luftstrom, noch ein in seinem Wesen ausgesprochen indirekt wirkender Luftstrom erzielen. Auch können die o.g. Verwirbelungen ungewünschte Geräuschbildung verursachen. Desweiteren sind sich auf den Gitterstäben insbesondere in den Zwischenräumen absetzende Staubpartikel nur äußerst schwer zu entfernen, so daß diese bekannte Belüftungsvorrichtung darüber hinaus unter optischen sowie hygienischen Gesichtspunkten Nachteile aufweist.

Aufgabe der Erfindung ist es, ein Luftausströmorgan mit gesteigerter Funktionalität aufzuzeigen. Diese Aufgabe wird durch die kennzeichnenden Merkmale des ersten Anspruchs gelöst, vorteilhafte Aus- und Weiterbildungen beschreiben die Unteransprüche.

Sind jedem von Luftleitstegen begrenzten Strömungsquerschnitt mehrere separate Austrittsöffnungen zugeordnet, so ist es durch gezielte Ausbildung der Luftleitstege und/oder Gestaltung der Austrittsöffnungen möglich, definiert eine indirekte bzw. direkte Luftausströmung zu erzielen. Um dabei den Einfluß störender Strömungsverwirbelungen so gering wie möglich zu halten, weisen die Begrenzungswände der Austrittsöffnungen eine äußerst geringe Dicke auf, welche vorteilhafterweise in Relation gesetzt wird zur Dicke der Luftleitstege, da sowohl erstere als auch letztere Störstellen für die Luftströmung bilden. Die Querschnitte der einzelnen Austrittsöffnungen sind dabei in der Regel wesentlich geringer als der lichte Strömungsquerschnitt zwischen zwei oder mehreren Luftleitstegen.

Insbesondere kann dabei das Abdeckgitter gemäß Anspruch 2 als feinmaschiges Netz ausgebildet sein. Diese Maßnahme verhindert die oben beschriebene Staubablagerung zwischen den einzelnen Gitterstreben. Vorteilhafterweise läßt sich ein derartiges Netz auch unter stylistischen Gesichtspunkten besser der umgebenden Struktur beispielsweise des Fahrzeug-Armaturenbrettes, anpassen. So kann es sich beispielsweise anbieten, ein erfindungsgemäß gestaltetes Luftausströmorgan ähnlich einer Lautsprecherabdeckung auszubilden, wenn letztere sowie das Abdeckgitter des Luftausströmorganes nahe beieinanderliegen. Generell lassen sich somit Armaturentafeln von Fahrzeugen unter Vermeidung der mit bisherigen Luftausströmorganen anzutreffenden Zergliederung optimal gestalten. Dabei können die Luftleitstege ohne Beachtung stylistischer Randbedingungen in funktions-optimaler Anordnung angebracht werden, da sie vom Abdeckgitter bzw. dem feinmaschigen Netz verdeckt werden. Letzteres kann dabei durch seine Formgebung bereits die Charakteristik des austretenden Luftstromes bestimmen. Weisen die Austrittsöffnungen verschiedenartige Austrittsquerschnitte auf, ist somit die Maschenweite des Abdeckgitters bzw. Netzes über der Oberfläche unterschiedlich, so läßt sich gewünscht eine direkte oder indirekte Ausströmcharakteristik erzielen. So können die Maschen des Gitters beispielsweise von der oberen Begrenzungskante zur unteren Begrenzungskante hin jeweils quasi stufenlos vergrößert sein.

Eine weiter verbesserte Luftausströmung ergibt sich mit den Merkmalen des vierten Anspruchs, da störende Verwirbelungen zwischen dem Ende des Luftleitsteges sowie der Auftreff-Fläche des Abdeckgitters hierdurch vermieden werden. Insbesondere läßt sich hiermit wieder ein in verstärkter Weise direkt wirkender Luftstrom erzielen. Daneben kann sich das Abdeckgitter hiermit auf den dann vorzugsweise starren Luftleitstegen abstützen. Um jedoch die Richtung des austretenden Luftstromes variieren zu können, können die Luftleitstege auch verstellbar ausgebildet sein. Hierbei empfiehlt es sich, die Luftleitstege mit einem flexiblen, das Abdeckgitter berührenden Dichtelement zu versehen. Eine zusätzliche Verstellmöglichkeit nach Anspruch 6 ermöglicht darüber hinaus eine Veränderung der Luftstrom-Charakteristik, da in Abhängigkeit von der gegenseitigen Stellung der Luftleitstege dem Luftstrom durch verschiedenartige Auffächerung eine mehr oder weniger direkte bzw. indirekte Charakteristik aufgeprägt werden kann. Insbesondere kann hierbei der lichte Querschnitt zwischen den Luftleitstegen veränderbar sein.

Eine detaillierte vorteilhafte konstruktive Ausgestaltung beschreibt Anspruch 8. Eine derartige Ausbildung ermöglicht es den verstellbaren Luftleitstegen, unabhängig von ihrer Position mit ihrem freien Ende stets an der Kanalseite des Abdeckgitters anzuliegen. Verallgemeinert ist dieses Prinzip in Anspruch 7 beschrieben ; denkbar sind somit beispielsweise auch kugelförmig gestaltete Abdeckgitter.

Nach Anspruch 9 können aber auch verschiedenartige Gruppen von Luftleitstegen, welche im übrigen nicht verstellbar zu sein brauchen, vorgesehen sein und dabei Luftaustrittsströme verschiedenartiger Charakteristik (direkt bzw. indirekt) erzeugen. Eine verstellbare Umschaltklappe ermöglicht es dabei einer Bedienperson, die gewünschte Charakteristik bzw. Austritts-Richtung zu wählen. Stets empfiehlt es sich dabei, zur Beeinflussung der Luftstromcharakteristik, beispielsweise durch eine oder mehrere der in Anspruch 10 genannten Maßnahmen hierfür gemäß den weiteren Merkmalen dieses Anspruchs nur ein einziges Betätigungselement vorzusehen, da nach neueren Erkenntnissen die bisherigen Luftausströmorgane oftmals unnötig komplexe Bedienelemente aufwiesen, die ursächlich für komfortmindernde Fehlbedienungen waren. Auch dieses nur in zwei Richtungen verstellbare Betätigungselement, das vorteilhafterweise auch die Auf-Zu-Steuerung des Luftausströmorganes übernehmen kann, läßt sich stylistisch optimal an die beispielsweise netzartige Gestaltung des Abdeckgitters anpassen.

Im folgenden wird die Erfindung anhand einiger bevorzugter Ausführungsbeispiele näher beschrieben. Es zeigt :

Fig. 1 in perspektivischer Darstellung ein Luftausströmorgan mit Abdeckgitter und verstellbarem Luftleitsteg,

Fig. 2 eine ähnliche Ausführung mit gegeneinander verstellbaren Luftleitstegen,

Fig. 3 eine andere Ausführungsform mit verstellbaren Luftleitstegen im Querschnitt, sowie

Fig. 4 in einer Darstellung ähnlich Fig. 3 eine Ausführungsvariante mit starren Luftleitstegen, und

Fig. 5 die Aufsicht auf eine Ausführungsform gemäß Fig. 3 oder Fig. 4 mit einem Betätigungsorgan.

In Prinzipskizzen dargestellt ist einzig stets ein Luftausströmorgan für den Innenraum von Kraftfahrzeugen, ohne dabei näheren Bezug auf die aktuellen Einbauverhältnisse zu nehmen. Selbstverständlich kann die ausgeführte Struktur dabei den umgebenden Bauteilen, beispielsweise des Fahrzeug-Armaturenbrettes, in räumlicher sowie stylistischer Weise optimal angepaßt werden.

Das Luftausströmorgan setzt sich im wesentlichen zusammen aus einem Luftkanal 1, dessen freies Ende mit einem starren, eine Vielzahl von Austrittsöffnungen 2 aufweisenden Abdeckgitter 3 verschlossen ist, sowie mehreren stromauf des Abdeckgitters innerhalb des Luftkanales angeordneten Luftleitstegen 5. Stets ist der Kanalquerschnitt in Richtung des Abdeckgitters, welches in den gezeigten Ausführungsbeispielen in Form eines feinmaschigen Netzes ausgebildet ist, erweitert. Die Luftleitstege 5 begrenzen dabei einen oder mehrere Strömungsquerschnitte 7, welche letztendlich nahe des Abdeckgitters 3 münden. Dabei sind jedem Strömungsquerschnitt 7 mehrere und insbesondere eine Vielzahl von separaten Austrittsöffnungen 2 zugeordnet. Die Begrenzungswände 9a bis d weisen eine gegenüber den Luftleitstegen geringere Dicke auf. Generell werden hierdurch trotz verdeckt angeordneter Luftleitstege funktional gesteigerte Luftausström-Verhältnisse sichergestellt.

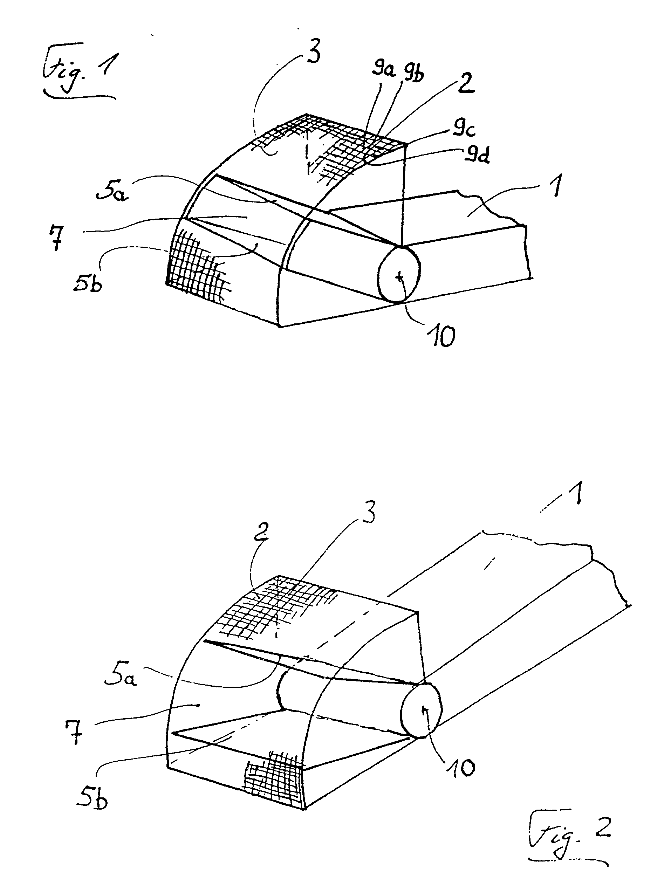

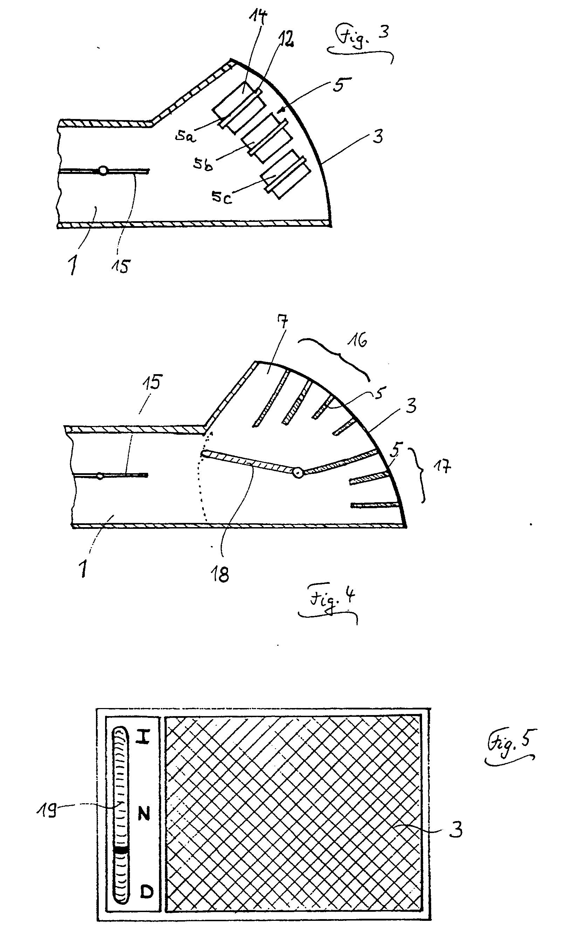

Sowohl im Ausführungsbeispiel nach Fig. 1 als auch in dem nach Fig. 2 berühren die beiden Luftleitstege 5a, 5b kanalseitig nahezu das Abdeckgitter 3. Nicht gezeigt ist dabei eine am freien Ende der verstellbaren Luftleitstege 5 angebundene flexible Dichtlippe. Das Abdeckgitter ist dabei in Form eines Zylindermantel-Segmentes ausgebildet ; dabei sind die verstellbaren Luftleitstege 5a, 5b in der zugehörigen Zylinderachse 10 drehbar gelagert. Während in Fig. 1 die Lage der beiden Luftleitstege 5a, 5b zueinander festgelegt ist und durch gemeinsames Verdrehen um die Zylinderachse 10 im wesentlichen die Richtung des durch das Abdeckgitter 3 austretenden Luftstromes veränderbar ist, sind bei der Ausführungsvariante gemäß Fig. 2 die beiden Luftleitstege 5a, 5b zusätzlich gegeneinander verdrehbar. Durch Veränderung des eigentlichen Austrittsquerschnittes im Bereich des Abdeckgitters 3 ist somit die Charakteristik des austretenden Luftstromes einstellbar. Bei großem Querschnitt wirkt das Luftausströmorgan in indirekter Weise, während bei geringem Austrittsquerschnitt die Wirkung einer direkten Austrittsdüse, welche zusätzlich vorteilhafterweise in ihrer Richtung verstellbar ist, erzielt wird.

Die Gestaltung des Luftkanales 1 sowie das Abdeckgitters 3 kann bei den Ausführungsbeispielen gemäß Fig. 3, 4 ähnlich derjenigen der Fig. 1, 2 sein. Fig. 3 zeigt dabei Luftleitstege 5a bis c, welche ähnlich den üblichen Luftausströmorganen, wie sie beispielsweise in der DE-C-26 28 663 gezeigt sind, ausgebildet sein können. Dabei sind jeweils um gemeinsame Achsen drehbare horizontale Schaufeln 12 sowie orthogonal dazu angeordnete vertikale Schaufeln 14 vorgesehen. Dabei können die vertikalen Schaufeln 14 über eine Kinematik mit den horizontalen Schaufeln 12 gekoppelt sein. Beispielsweise wird bei Ausrichtung der horizontalen Schaufeln 12 auf einen Fahrzeuginsassen ein gebündelter Luftstrom erzeugt, während beispielsweise beinach oben gerichteter Ausströmung durch gleichlaufende Spreizung der Schaufeln 14 ein breitgefächerter Luftstrom entsteht. Stromauf der Luftleitstege ist dabei zusätzlich eine die Intensität des Luftstromes steuernde Drosselklappe 15 vorgesehen, welche aber auch in einem zugeordneten Heiz-Klimagerät angeordnet sein kann.

Im Ausführungsbeispiel nach Fig. 4 tangieren die starren Luftleitstege 5 abermals kanalseitig das Abdeckgitter 3. Die Anordnung der einzelnen Luftleitstege 5 ist dabei so gewählt, daß eine erste Gruppe 16 den Luftstrom vorrangig mit indirekter Charakteristik durch das Abdeckgitter 3 austreten läßt, während eine zweite Gruppe 17 vorrangig einen direkten Luftstrom erzeugt. Unterstützend zur Erzeugung der verschiedenartigen Charakteristika kann dabei das Abdeckgitter 3 im Bereich 17 grobmaschiger ausgebildet sein als im Bereich der ersten Gruppe 16. Nicht gezeigte vertikale Luftleitstege erzeugen dabei eine verschiedenartige Auffächerung. Vorgesehen ist desweiteren eine verstellbare Umschaltklappe 18, welche eine mengenmäßige Aufteilung des Luftstromes auf die beiden Gruppen 16, 17 vornimmt.

Fig. 5 zeigt die Aufsicht auf ein Luftausströmorgan gemäß Fig. 3 oder Fig. 4. Neben dem netzartig ausgebildeten Abdeckgitter 3 ist ein Betätigungselement 19 in Form eines Rändelrades angeordnet. Dieses ist nach oben oder unten verdrehbar und stellt dabei einen Luftstrom direkter (Stellung "D") oder indirekter (Stellung "I") ein. In der Stellung "N" wird die Luftzufuhr zum Luftausströmorgan unterbunden, in den Zwischenstellungen ist die Luftstromintensität beeinflußbar. Hierzu sind über geeignete Steuerkulissen die Luftleitstege 5 oder die Umschaltklappe 18 mit der Drosselklappe 15 gekoppelt. Zur Intensitätsregelung (inclusive Nullstellung) kann aber auch ein separates Betätigungselement vorgesehen sein (nicht gezeigt).

## Ansprüche

1. Luftausströmorgan für den Innenraum von Kraftfahrzeugen, mit einem Luftkanal (1), dessen freies Ende mit einem starren, eine Vielzahl von Austrittsöffnungen (2) aufweisenden Abdeckgitter (3) verschlossen ist, stromauf dessen mehrere nebeneinander angeordnete Luftleitstege (5) vorgesehen sind, dadurch gekennzeichnet, daß jedem von Luftleitstegen (5), begrenzten Strömungsquerschnitt (7) mehrere separate Austrittsöffnungen (2) zugeordnet sind, wobei die Begrenzungswände (9) der Austrittsöffnungen (2) eine gegenüber den Luftleitstegen geringe Dicke aufweisen.

2. Luftausströmorgan nach Anspruch 1, dadurch gekennzeichnet, daß das Abdeckgitter (3) in Form eines feinmaschigen Netzes ausgebildet ist.

3. Luftausströmorgan nach Anspruch 1 oder 2, dadurch gekennzeichnet, daß Austrittsöffnungen von verschiedenartigem Austrittsquerschnitt vorgesehen sind.

4. Luftausströmorgan nach einem der vorangegangenen Ansprüche, dadurch gekennzeichnet, daß die Luftleitstege (5) das Abdeckgitter (3) kanalseitig berühren.

5. Luftausströmorgan nach Anspruch 4, dadurch gekennzeichnet, daß die Luftleitstege (5) am Abdeckgitter angebunden sind.

6. Luftausströmorgan nach einem der vorangegangenen Ansprüche, dadurch gekennzeichnet, daß die Luftleitstege (5) gegeneinander verstellbar sind.

7. Luftausströmorgan nach einem der vorangegangenen Ansprüche, dadurch gekennzeichnet, daß das Abdeckgitter zumindest bereichsweise bezüglich eines Zentrums annähernd radial gewölbt ausgebildet ist, wobei im Zentrum zumindest ein Luftleitsteg verstellbar gelagert ist.

8. Luftausströmorgan nach Anspruch 7, dadurch gekennzeichnet, daß das Abdeckgitter (3) in Form eines Zylindermantel-Segmentes ausgebildet ist, wobei die verstellbaren Luftleitstege (5a, 5b) in der zugehörigen Zylinderachse (10) drehbar gelagert sind.

9. Luftausströmorgan nach einem der vorangegangenen Ansprüche, dadurch gekennzeichnet, daß verschiedenartige Gruppen (16, 17) von Luftleitstegen (5) vorgesehen sind, welche mittels einer verstellbaren Umschaltklappe (18) von einem veränderbaren Luftstrom-Anteil beaufschlagt werden.

10. Luftausströmorgan nach einem der vorangegangenen Ansprüche, dadurch gekennzeichnet daß für die Einstellung der Luftstromcharakteristik durch Beaufschlagung unterschiedlicher Austrittsöffnungen (2) und/oder unterschiedlicher Luftleitsteg-Gruppen (16, 17) und/oder durch Gegeneinander-Verstellen der Luftleitstege (5) ein lediglich in zwei Richtungen verstellbares Betätigungselement (19) vorgesehen ist.

## Claims

1. An air vent for the interior of motor vehicles, having an air passage (1), the free end of which is closed with a rigid cover lattice (3) comprising a plurality of outlet openings (2), upstream of which there are provided several air guide bars (5) arranged side by side, characterised in that to each flow cross-section (7) limited by air-guide bars (5) there are allocated several separate outlet openings (2), while the defining walls (9) of the outlet openings (2) have a slight thickness compared with the air guide bars.

2. An air vent according to Claim 1, characterised in that the cover lattice (3) is made in the form of a fine-meshed net.

3. An air vent according to Claim 1 or 2, characterised in that outlet openings of various kinds of outlet cross-section are provided.

4. An air vent according to any one of the preceding Claims, characterised in that the air guide bars (5) are in contact with the cover lattice (3) on the passage side.

5. An air vent according to Claim 4, characterised in that the air guide bars (5) are bound to the cover lattice.

6. An air vent according to any one of the preceding Claims, characterised in that the air guide bars (5) are adjustable in relation to one another.

7. An air vent according to any one of the preceding Claims, characterised in that the cover lattice is made, at least by zones, approximately radially domed in relation to a centre, and at least one air guide bar is mounted displaceably in the centre.

8. An air vent according to Claim 7, characterised in that the cover lattice (3) is made in the form of a segment of a cylinder surface, and the adjustable air guide bars (5a, 5b) are mounted rotatably in the respective cylinder axis (10).

9. An air vent according to any one of the preceding Claims, characterised in that various kinds of groups (16, 17) of air guide bars (5) are provided upon which a variable airflow proportion acts by means of an adjustable change-over air valve (18).

10. An air vent according to any one of the preceding Claims, characterised in that an actuating element (19) displaceable only in two directions is provided for the adjustment of the air flow characteristics by action upon different outlet openings (2) and/or different air guide bar groups (16, 17) and/or by shifting the air guide bars (5) in relation to one another.

**Revendications**

1. Dispositif aérateur pour l'habitacle d'automobiles, avec un canal d'air (1), dont l'extrémité libre est fermée par une plaque de grille (3) présentant un grand nombre d'orifices (2) fixes de sortie avec en amont plusieurs volets d'air disposés côte à côte, caractérisé en ce que chaque section d'écoulement (7) est délimitée par des volets d'air (5), à laquelle correspondent plusieurs orifices de sortie (2), les parois de limitation (9) des orifices de sortie (2) présentant une faible épaisseur vis-à-vis des volets d'air.

2. Dispositif aérateur selon la revendication 1, caractérisé en ce que la plaque de grille (3) a la forme d'un réseau métallique à maille fine.

3. Dispositif aérateur selon la revendication 1 ou 2, caractérisé en ce qu'on prévoit les orifices de sortie avec des sections de sortie différentes.

4. Dispositif aérateur selon l'une des revendications précédentes, caractérisé en ce que les volets d'air (5) touchent la plaque de grille (3) du côté du canal.

5. Dispositif aérateur selon la revendication 4, caractérisé en ce que les volets d'air (5) sont reliés à la plaque de grille (3).

6. Dispositif aérateur selon l'une des revendications précédentes, caractérisé en ce que les volets d'air (5) sont réglables l'un par rapport à l'autre.

7. Dispositif aérateur selon l'une des revendications précédentes, caractérisé en ce que la plaque de grille est de forme incurvée radialement par rapport à un centre, au moins en partie, un volet d'air au moins étant logé de manière réglable au centre

8. Dispositif aérateur selon la revendication 7, caractérisé en ce que la plaque de grille (3) a la forme d'un serpent d'enveloppe cylindrique, les volets d'air réglables (5a, 5b) étant logés en rotation sur l'axe de cylindre (10) correspondant.

9. Dispositif aérateur selon l'une des revendications précédentes, caractérisé en ce qu'on prévoit différents groupes (16, 17) de volets d'air (5), qu'on soumet à un courant d'air partiel variable par un volet de fermeture (18) réglable.

10. Dispositif aérateur selon l'une des revendications précédentes, caractérisé en ce qu'on prévoit le réglage de la caractéristique d'écoulement en mettant en service différents orifices de sortie (2) et/ou différents groupes de volets (16, 17) par réglage des volets d'air (5) l'un par rapport à l'autre grâce à un seul élément de réglage (16) mobile dans deux directions.

Fig. 1

Fig. 2

14  12  *Fig. 3*

5

5a

5b

3

5c

1   15

7   16

15   5

3

5

17

1   18

*Fig. 4*

*Fig. 5*

I

N

19

D

3